# EUROPEAN PATENT SPECIFICATION

(11) **EP 1 753 167 B1**
(45) Date of publication and mention of the grant of the patent: **17.03.2010**
(21) Application number: 06076753.0
(22) Date of filing: 23.01.1998
(51) Int. Cl.: H04L 12/24, G06F 9/46

(54) **System and method for monitoring and management of telecommunications equipment using enhanced internet access**
System und Verfahren zur Überwachung und Verwaltung von Telekommunikationsanlagen mit verbessertem Internet-zugriff
Système et procédé de contrôle et gestion d'un équipement de télécommunications au moyen d'un accès perfectionne à internet

(30) Priority: 27.01.1997 US 34874 P; 30.09.1997 US 940827
(43) Date of publication of application: 14.02.2007
(62) Divisional of application: 98903742.9
(73) Proprietor: Alcatel-Lucent USA Inc., Murray Hill, New Jersey 07974 (US)
(72) Inventor: Pullen, Steve M., Rowlett, TX 75088 (US); Miller, Donald W., Jr., Plano, TX 75024 (US); Atkinson, Carla M., Plano, TX 75023 (US); Bishop, Eddie E., Jr., McKinney, TX 75070 (US); Horvath, Joe K., Plano, TX 75023 (US); Blanchard, Alfred J., Plano, TX 75023 (US); Gates, Ronald H., Dallas, TX 75252 (US)
(74) Representative: Horner, David Richard

(56) References cited:
- LARSEN A K: "THE NEXT WEB WAVE: NETWORK MANAGEMENT" DATA COMMUNICATIONS, MCGRAW HILL. NEW YORK, US, vol. 25, no. 1, January 1996 (1996-01), pages 31-32,34, XP000545237 ISSN: 0363-6399
- BRUNO L: "LASTING LEGACY: BROWSING BIG IRON ON THE WEB" DATA COMMUNICATIONS, MCGRAW HILL. NEW YORK, US, vol. 25, no. 15, November 1996 (1996-11), pages 110-112,116, XP000639963 ISSN: 0363-6399
- HAMILTON M A: "JAVA AND THE SHIFT TO NET-CENTRIC COMPUTING" COMPUTER, IEEE SERVICE CENTER, LOS ALAMITOS, CA, US, vol. 29, no. 8, August 1996 (1996-08), pages 31-39, XP000632765 ISSN: 0018-9162
- PENNINO E ED - INSTITUTE OF ELECTRICAL AND ELECTRONICS ENGINEERS: "A VISION FOR AN AUTOMATIC MESSAGE ACCOUNTING (AMA) DATA NETWORKING SYSTEM" PROCEEDINGS OF THE NETWORK OPERATIONS AND MANAGEMENT SYMPOSIUM (NOMS). MEMPHIS, APR. 6 - 9, 1992, NEW YORK, IEEE, US, vol. VOL. 1, January 1992 (1992-01), pages 196-207, XP000344754 ISBN: 0-7803-0588-4
- LARSEN A K: "WEAVING THE MANGEMENT WEB" DATA COMMUNICATIONS, MCGRAW HILL. NEW YORK, US, vol. 25, no. 1, January 1996 (1996-01), page 92,94, XP000545253 ISSN: 0363-6399
- HAETOENEN K ET AL: "TASA: TELECOMMUNICATION ALARM SEQUENCE ANALYZER" 1996 IEEE NETWORK OPERATIONS AND MANAGEMENT SYMPOSIUM (NOMS). KYOTO, APR. 15 - 19, 1996, IEEE NETWORK OPERATIONS AND MANAGEMENT SYMPOSIUM (NOMS), NEW YORK, IEEE, US, vol. VOL. 2 SYMP. 5, 15 April 1996 (1996-04-15), pages 520-529, XP000634816 ISBN: 0-7803-2519-2

## Description

### TECHNICAL FIELD OF THE INVENTION

This invention is related in general to the field of telecommunications. More particularly, the invention is related to a system and method for monitoring and management of telecommunications equipment using enhanced internet access.

### BACKGROUND OF THE INVENTION

A telecommunications service provider such as MCI typically owns and operates a large number of telecommunications switches and other equipment in the public switched telephone network. These telecommunications switches are generally physically located throughout the United States and the globe to achieve close proximity access to the telephone customers.

Within the telecommunications service provider there may be a central network operations site that has access to all the telecommunications equipment in the network owned by the service provider to perform support, monitoring and management services. These services include billing, and setting up or changing telephone services. The telecommunications equipment are further monitored and controlled by additional craft personnel who operate out of offices that are physically located closer to the equipment they manage. Other craft personnel may operate out of more remote sites such as their home offices. Typically, a modem-based RS232 ASCII protocol is used for the link up between X-terminals located at the remote sites to the telecommunications equipment. Although graphical user interfaces (GUIs) can be supported by this access scheme, it is excruciating slow because it operates on a bit map or pixel information basis. Thus, a very wide pipe, such as a T1 span, is required to enable even minimally adequate graphical update of screen information and display.

LARSEN A K: "THE NEXT WEB WAVE: NETWORK MANAGEMENT" DATA COMMUNICATIONS, vol. 25, no. 1, 1 January 1996, page 31/32, 34 XP000545237 discloses placing web software directly into hubs and routers to enable net managers to use web browser software to monitor and control such equipment. The web management code is placed in the equipment and converts each device into a web server, enabling net managers to call the device and view a management home page, Net managers can then configure ports and get basic status information.

BRUNO L: "LASTING LEGACY; BROWSING BIG IRON ON THE WEB" DATA COMMUNICATIONS, McGraw Hill, New York, US, vol. 25, no. 15, November 1996 (1996-11), pages 110-12, 116, XP000639963 ISSN: 0363-6399, describes the use of a web server to enable end-users to access mainframe applications from anywhere in the world via their web browsers. Scripts can be created for capturing data from a legacy application of such a mainframe and dumping it into a desktop application like Excel.

HAMILTON M A: "JAVA AND THE SHIFT TO NET-CENTRIC COMPUTTNG" COMPUTER, vol. 29, no. 8, August 1996, pages 31-39, XP000632765 relates to the java programming language and, in particular to the "write once, run anywhere" benefits of the java language.

There is a further need to allow the telecommunications equipment manufacturer to have access to the telecommunications equipment for further product support. Generally, the customer support, field service personnel, and engineers do not have access to most or all of the telecommunications equipment operating in the field. This is highly desirable to provide the telecommunications service provider, and, ultimately, the telecommunications customers, the best and responsive maintenance and support possible.

### SUMMARY OF THE INVENTION

Accordingly, there is a need to provide enhanced access to telecommunications equipment in the telecommunications network for monitoring and management thereof.

Particular and preferred aspects of the present invention are set out in the accompanying independent and dependent claims.

In accordance with embodiments of the present invention, a technique for monitoring and management of telecommunications equipment using enhanced internet access is provided which eliminate or substantially reduce the disadvantages associated with prior systems and methods.

In one embodiment, a system for monitoring and management of telecommunications equipment using the internet is provided. The system includes a web server residing on the telecommunications equipment, where the web server is identifiable by an internet address. A plurality of web pages containing monitor information associated with the telecommunications equipment are accessible by the web server by specifying an internet address therefor. A web browser application executing on a user device may be connected with the web server using its internet address and to further receive the plurality of web pages therefrom over the internet. The web pages further receive usher input and transmit them to the web server.

In another embodiment, a system for monitoring and management of telecommunications equipment in a telecommunications network via the internet is provided. The system includes a plurality of user devices each executing a web browser for communications with the internet. An intranet is in communications with the internet. A web server identifiable by an internet address resides on each telecommunications equipment, where the telecommunications equipment of the telecommunications network are coupled to the intranet. A plurality of web pages for displaying monitoring and management information associated with the telecommunications equipment are accessible by the web server via the internet and intranet.

In yet another embodiment, a method for monitoring and management of telecommunications equipment in a telecommunications network via the internet is provided. The method includes the steps of connecting a plurality of user devices to the internet, each user device executing a web browser, and connecting the telecommunications equipment by an intranet to the internet. The telecommunications equipment may be accessed by specifying an internet address of a web server residing on the telecommunications equipment, and downloading a plurality of web pages from the web server via the internet and intranet. The web pages display monitor and management information associated with the telecommunications equipment.

### BRIEF DESCRIPTION OF THE DRAWINGS

For a better understanding of the present invention, reference may be made to the accompanying drawings, in which:
FIGURE 1 is a high level block diagram of a distributed telecommunication switching system;
FIGURE 2 is a high level block diagram of apparatus and method for monitoring and management of telecommunications equipment using enhanced internet access according to an embodiment of the present invention;
FIGURE 3 is a more detailed block diagram of an exemplary communications process between a piece of telecommunications equipment and a remote workstation according to an embodiment of the present invention;
FIGURE 4 is an exemplary screen of a web page serving as an entry point into remote access of telecommunications equipment via internet according to an embodiment of the present invention;
FIGURE 5 is an exemplary screen of a web page providing a selection list of telecommunications equipment available for access via internet according to an embodiment of the present invention;
FIGURE 6 is an exemplary screen of a web page providing a selection of available monitoring and management functionality for access via internet according to an embodiment of the present invention;
FIGURE 7 is an exemplary screen of a web page executing one or more java applets and displaying a list of registered tasks or applications via internet according to the teachings of the present invention;
FIGURE 8 is an exemplary screen of a web page executing one or more java applets and displaying a trace log via internet according to an embodiment of the present invention;
FIGURE 9 is an exemplary screen of a web page executing one or more java applets and displaying the status of an automatic message accounting server via internet according to an embodiment of the present invention;
FIGURE 10 is a portion of an exemplary screen of a web page executing one or more java applets and displaying a morning report via internet according to an embodiment of the present invention; and
FIGURE 11 is a block diagram of exemplary server processes running in the services element according to an embodiment of the present invention.

### DETAILED DESCRIPTION OF THE INVENTION

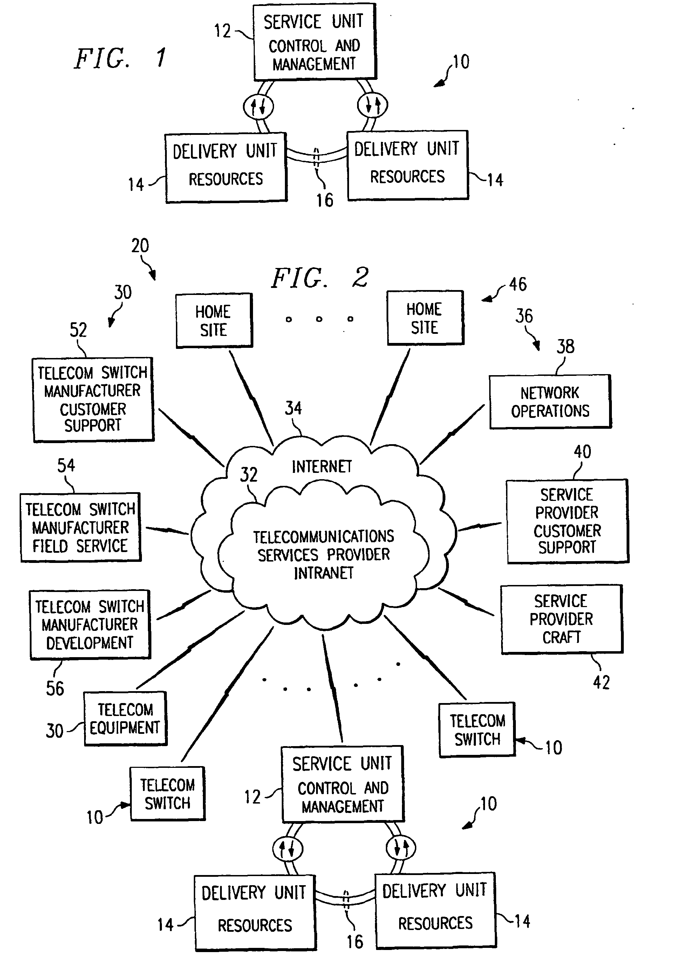

The preferred embodiment(s) of the present invention is (are) illustrated in FIGURES 1-11, like reference numerals being used to refer to like and corresponding parts of the various drawings.

Referring to FIGURE 1, a distributed telecommunications switching system 10 is shown. Distributed telecommunications switching system 10 includes a service unit 12 that preferably provides control and management on an advanced intelligent network (AIN) service platform using information network architecture (INA) software design principles. Distributed telecommunications switching system 10 further includes at least one delivery unit 14 that provides the message transport mechanism for call information under the control and direction of service unit 12. Service unit 12 and delivery units 14 may communicate with one another through a fiber optic or wire-based ring 16. Caul information is preferably transported between delivery units 14 and service unit 12 in asynchronous transfer mode (ATM) celt format. Delivery units 14 may operate in a broadband, wideband, narrowband, or a combination of these speeds and formats. For a more detailed description of distributed telecommunications switching system 10, please refer to U.S. Patent 5,495,484, titled *Distributed Telecommunications Stitching System*, issued to Self et al. on Feb. 27, 1996.

To provide maintenance and management of distributed telecommunications switching system 10 and other telecommunications equipment 30 in the telecommunications network, access thereto is provided through a telecommunications services provider's intranet 32 and the internet 34. Through internet 34 and intranet 32, telecommunications services provider's operations and support personnel 36 at various sites may access, monitor and control any of the telecommunications equipment. This may include personnel who operate out of home offices 46 or sites remote from a centralized network operations site 38, or customer support and craft sites 40 and 42. Further, personnel 50 of the telecommunications equipment manufacturer, such as customer support 52, field service 54, and development/engineering 56, may also access and provide maintenance and support of telecommunications equipment operating in the network through internet 34 and intranet 32.

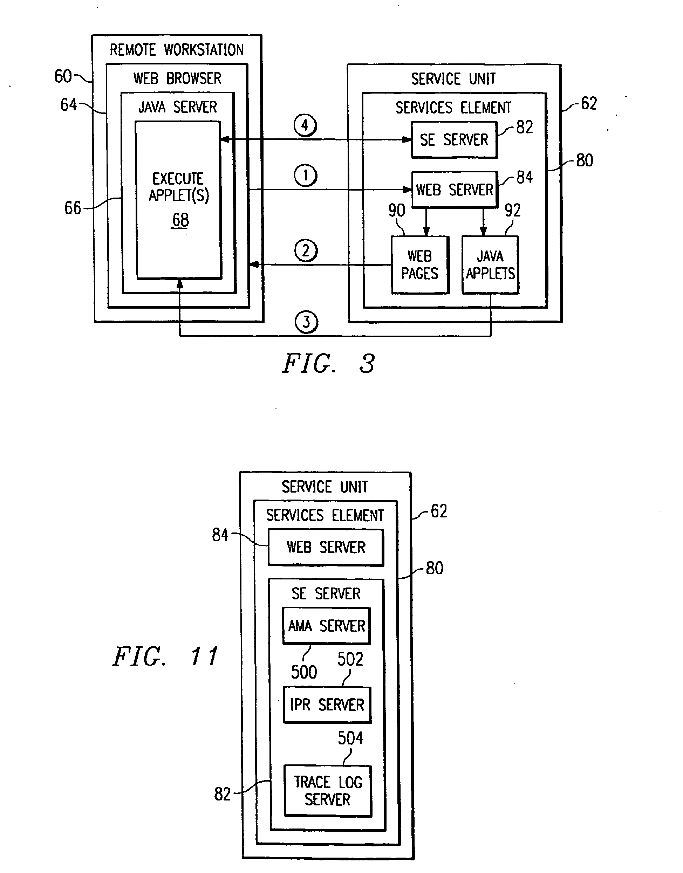

Referring to FIGURE 3, a remote workstation 60 may communicate with a piece of telecommunications equipment such as service unit 62 via internet 34 and intranet 32 (FIGURE 2). Remote workstation 60 may be a personal computer, lap top computer, notebook computer, workstation, and any other computing platform that is capable of executing a web browser program 64, preferably one that is Java-enabled, such as the Netscape Navigator^{™} and Microsoft Explorer^{™}. When a web browser 64 is Java-enabled, it includes a Java server or engine 66 that enables it to execute Java applets or application programs 68.

Service unit 62 includes a services element (SE) 80 which is a process manager that controls and manages all the servers running in service unit 62, including a services element server 82 and a web server 84. Services Element 80 further includes web pages 90 in a specialized language, such as hyper-text markup language (HTML), and Java applets 92 that provide the context and application programs to monitor and control service unit 62.

In operation, workstation 60 dials up to an internet service provider with a modem (not shown) to obtain an internet connection. The craft personnel connects with web server 84 by supplying its web address or uniform resource locator (URL) to web browser 64. When a connection with web server 84 is made, a home web page may be displayed with access options. The craft personnel may specify a specific web page 90 by supplying its address or by clicking on an access option displayed on the home web page (action 1). Web server 84 looks up and sends the requested web page, which is transmitted then displayed on the screen of workstation 60 (action 2). Web server 84 further looks up and transmits one or more Java applets associated with the requested web page (action 3), which is then executed by Java server 66 on workstation 60. The executing Java applet may perform different functions, one of which is to request specific data or information from services element server 82, such as trace log data for program trace information, information and problem reports (IPRs) for system status information, and automatic message accounting (AMA) status and information for billing purposes. Executing applets 68 may also allow a craft personnel to send command and control data to services element server 82, which may modify or update service unit operations.

Operating in this manner, authorized operations and support personnel of both the telecommunications services provider and equipment manufacturer may access and control the operations of all telecommunications equipment in the network in a fast and efficient manner. This access method is platform independent and only requires the remote workstation to have a Java-enabled web browser to function. Accordingly, problems that surface in the middle of the night may be easily responded to by craft personnel working on home computers. The operations of remote equipment may also be easily maintained and managed. Further, the web pages along with the displayed data can be easily printed to obtain hard copy information of the telecommunications equipment.

It may be seen that network security issues must be addressed, and that security measures such as fire walls and the like may be used to ensure only personnel with the proper authorization may access in this manner.

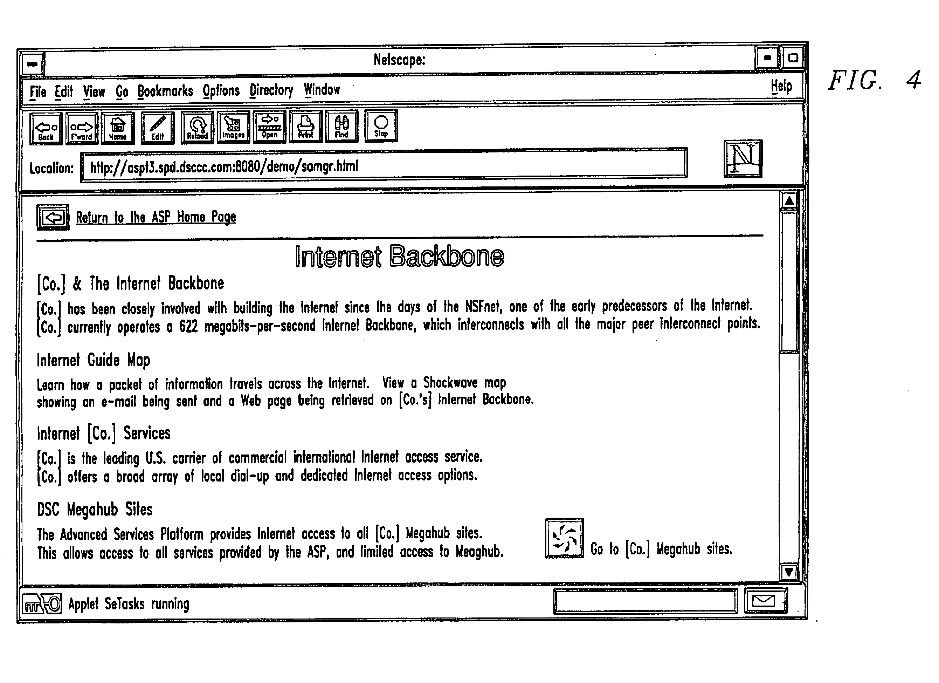

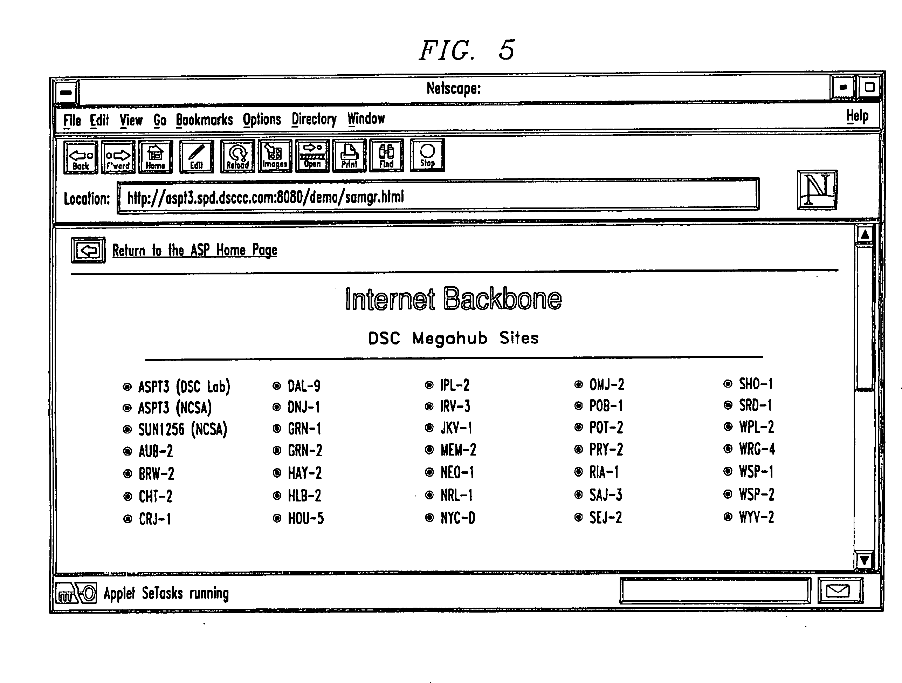

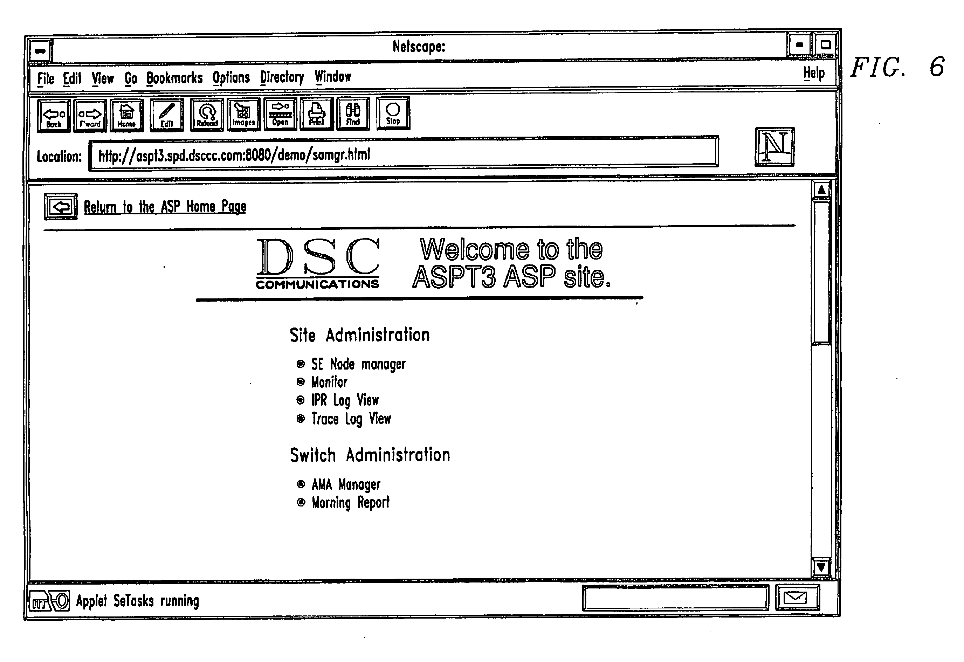

FIGURE 4 is an exemplary home page that provides access to telecommunications equipment in the network. The text "DSC Megahub^{™} Sites" may be highlighted to show that it is a hyper link to another web page, which is shown in FIGURE 5. FIGURE 5 provides a list of hyper links to a number of telecommunications equipment, more specifically, telecommunications switches, that are in the network and available for access. The craft personnel may select a specific equipment by clicking on its name, which brings up a subsequent web page, shown in FIGURE 6. FIGURE 6 provides an exemplary list of functionality available for the selected equipment, which includes functionality related to a site or service unit, or functionality related to a delivery unit of the site.

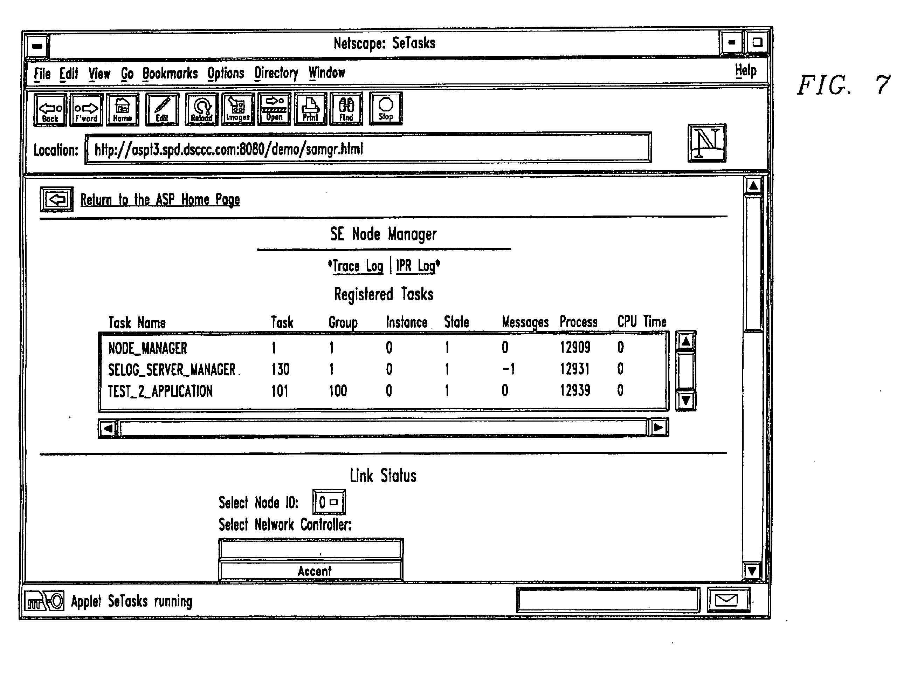

FIGURE 7 is an exemplary screen representation of the services element node manager or services element web page, when it is selected. A list of tasks or processes registered with services element is displayed along with attendant information. Where more than one equipment is resident at the same site, the craft personnel may supply a node identifier (ID) and local area network (LAN) controllers to enable the monitoring and management of specific local area network (LAN) segments and communications thereon.

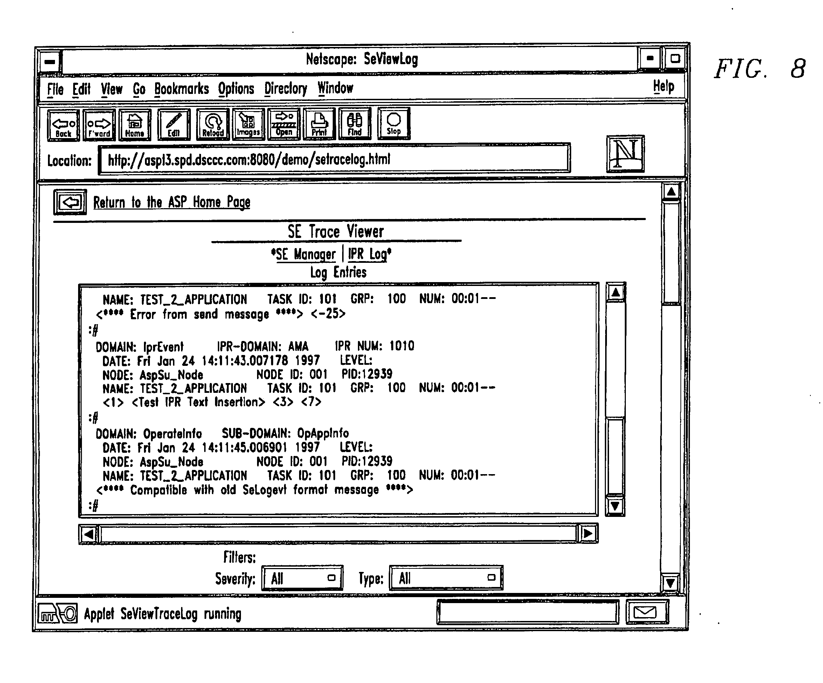

FIGURE 8 is an exemplary screen representation of a web page providing trace message information. Trace logs may be used to gather data during network and equipment troubleshooting sessions, for example. Filters are available to provide several levels or views of trace messages. As it may be seen, the trace function may focus on one or more domains or sub-domains.

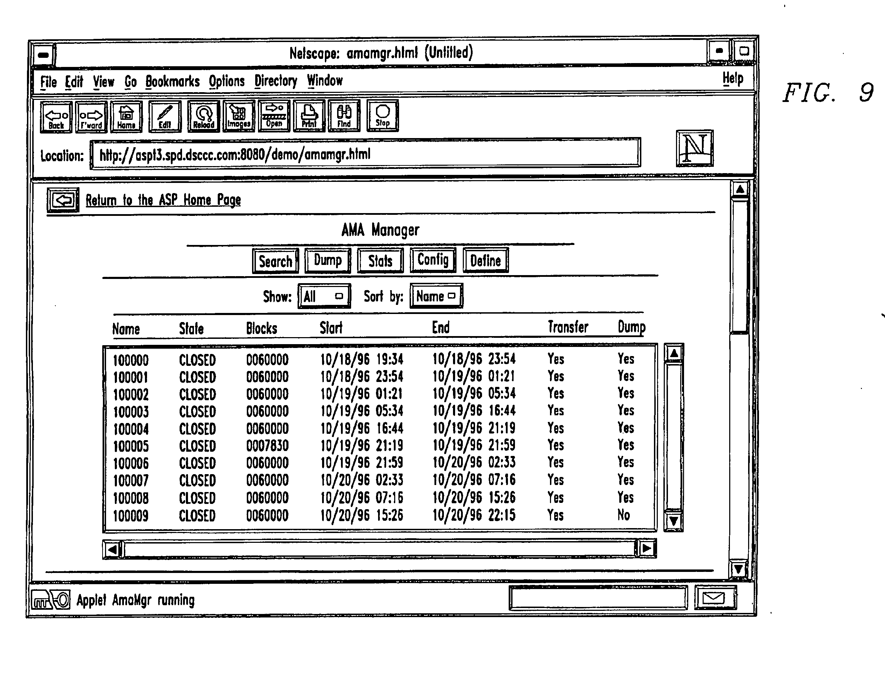

Automated message accounting is the function of dumping or transferring call records to tape. FIGURE 9 provides an exemplary screen representation of a web page that provides automatic message accounting monitoring and management. From this web page, a craft personnel may search for a specific block of call records, and manually dump it to tape, for example.

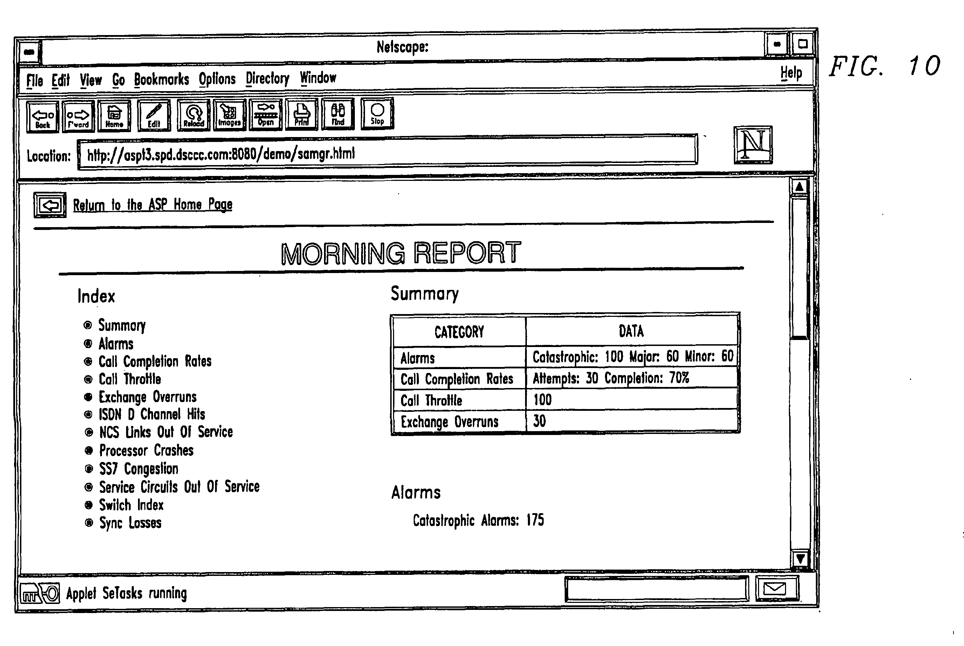

FIGURE 10 is an exemplary web page of a morning report, also available through internet access according to the teachings of the present invention. Every morning or any other selected time of the day or night, certain specific information about each equipment or site may be collected and reported by Java applets of this web page. An exemplary list of information is shown in FIGURE 10.

Referring to FIGURE 11, it may been that in addition to services element server B2 and web server 84 described above, there may be further provided an automatic message accounting server 500, an information and problem report server 502, and a trace log server 504 that perform the respective functions and provide web server 84 the attendant information displayed by each web page. For a more detailed discussion of automatic message accounting server 500, please refer to U.S. Patent Application Serial No. 08/757,465, titled *Database-Driven Automatic Message Accounting System and Method* (Attorney Docket 036560.1565).

Although several embodiments of the present invention and its advantages have been described in detail, it should be understood that mutations, changes, substitutions, transformations, modifications, variations, and alterations can be made therein without departing from the teachings of the present invention, the scope of the invention being set forth by the appended claims.

## Claims

1. A telecommunications equipment (62; 10; 30) comprising:
a web server (84) identifiable by an internet address and adapted to be connected to a remote workstation (60), said remote workstation comprising a workstation readable medium storing a web browser (64) and an associated java server (66); and
an equipment readable medium storing web pages (90) adapted to display monitor information associated with the telecommunications equipment and receive user input, the web pages being accessible by the web server;
**characterised in that** the equipment readable medium further comprises java applets (92) associated with the web pages, the java applets being downloadable to the remote workstation and being executable by the java server to monitor and control the telecommunications equipment, and that said web pages include a web page which enables the user input to be sent as command and control data to the web server to modify or update the telecommunications equipment operations.

2. The telecommunications equipment as set forth in claim 1, wherein said web page is associated with a java applet adapted, when executed on said remote station to enable said user input to be sent as command and control data to the web server to modify or update the telecommunications equipment operations,

3. The telecommunications equipment as set forth in claim 1, wherein the web server couples with the remote workstation via an intranet (32).

4. The telecommunications equipment as set forth in claim 1, further comprising an automatic message accounting server (500) in communications with the web server and having a plurality of web pages dedicated to billing information monitoring and management.

5. The telecommunications equipment, as set forth in claim 1, further comprising an information and problem report server (502) in communications with the web server and having a plurality of web pages stored thereon dedicated to system status information monitoring and management.

6. The telecommunications equipment, as set forth in claim 1, further comprising a trace log server (504) in communications with the web server and having a plurality of web pages stored thereon dedicated to program trace information monitoring and management.

7. The telecommunications equipment, as set forth in claim 1, further comprising an automatic message accounting server (500) accessible by the web browser and having a plurality of web pages stored thereon dedicated to billing information monitoring and management.

8. The telecommunications equipment, as set forth in claim 1, further comprising an information and problem report server (502) accessible by the web browser and having a plurality of web pages stored thereon dedicated to system status information monitoring and management.

9. The telecommunications equipment, as set forth in claim 1, further comprising a trace log server (504) accessible by the web browser and having a plurality of web pages stored thereon dedicated to program trace information monitoring and management.

10. The telecommunications equipment, as set forth in claim 1, wherein the telecommunications equipment is a distributed switching system having a service unit (12) coupled to at least one delivery unit (14), the web server residing in the service unit.

11. The telecommunications equipment, as set forth in claim 1, wherein the plurality of web pages include web pages dedicated to automatic message accounting information for billing information monitoring and management.

12. The telecommunications equipment, as set forth in claim 1, wherein the plurality of web pages include web pages dedicated to information and problem report information for system status information monitoring and management.

13. The telecommunications equipment, as set forth in claim 1, wherein the plurality of web pages include web pages dedicated to program trace information monitoring and management.

14. A method comprising the steps of:
connecting a web server (84) of a telecommunications equipment (62; 10; 30) to a remote workstation (60), said remote workstation comprising a workstation readable medium storing a web browser (64) and an associated java server (66); and
downloading web pages (90) from the web server, the web pages being adapted to display monitor information associated with the telecommunications equipment; and
receiving user input and transmitting the user input to the web server,
**characterised in that** the step of downloading further comprises downloading java applets associated with the web pages from the web server and that the method further comprises the step of executing the java applets on the java server to monitor and control the telecommunications equipment and wherein said web pages include a web page which enables the user input to be sent as command and control data to the web server to modify or update the telecommunications equipment operations.

15. The method as set forth in claim 14, wherein said web page is associated with a java applet adapted, when executed on said remote station to enable said user input to be sent as command and control data to the web server to modify or update the telecommunications equipment operations.

16. The method, as set forth in claim 14, wherein the telecommunications equipment is provided in a telecommunications network, comprising the steps of:
connecting the telecommunications equipment by an intranet to the internet; and
wherein the step of downloading comprises downloading the web pages from the web server via the internet and intranet, the web pages being adapted to display monitor and management information associated with the telecommunications equipment.

17. The method, as set forth in claim 16, further comprising the steps of:
accessing an automatic message accounting server (500); and
downloading a plurality of web pages dedicated to billing information monitoring and management.

18. The method, as set forth in claim 16, further comprising the steps of:
accessing an information and problem report server (502); and
downloading a plurality of web pages dedicated to system status information monitoring and management.

19. The method, as set forth in claim 16, further comprising the steps of:
accessing a trace log server (504); and
downloading a plurality of web pages dedicated to program trace information monitoring and management.

20. The method, as set forth in claim 16, wherein the downloading step further comprises the step of downloading a plurality of web pages dedicated to automatic message accounting information monitoring and management.

21. The method, as set forth in claim 16, wherein the downloading step further comprises the step of downloading a plurality of web pages dedicated to system status information monitoring and management.

22. The method, as set forth in claim 16, wherein the downloading step further comprises the step of downloading a plurality of web pages dedicated to program trace information monitoring and management.

## Patentansprüche

1. Telekommunikationseinrichtung (62, 10, 30) mit:
einem Webserver (84), der durch eine Internetadresse identifizierbar ist und der so eingerichtet ist, dass er mit einer entfernt liegenden Workstation (60) verbindbar ist, wobei die entfernt liegende Workstation ein von der Workstation lesbares Medium aufweist, welches einen Webbrowser (64) und einen zugeordneten Java-Server (66) speichert, und
einem von der Einrichtung lesbaren Medium, das Webseiten (90) speichert, die so eingerichtet sind, dass sie Überwachungsinformationen anzeigen, die der Telekommunikationseinrichtung zugeordnet sind und eine Benutzereingabe empfangen, wobei die Webseiten für den Webserver verfügbar sind,
**dadurch gekennzeichnet, dass** das von der Einrichtung lesbare Medium darüber hinaus Java-Applets (92) aufweist, die den Webseiten zugeordnet sind, wobei die Java-Applets zu der entfernt liegenden Workstation herunterladbar sind und von dem Java-Server ausführbar sind, um die Telekommunikationseinrichtung zu überwachen und zu steuern, und dass die Webseiten eine Webseite aufweisen, die es ermöglicht, die Benutzereingabe als Befehlsdaten und Steuerdaten an den Webserver zu senden, um die Arbeitsweise der Telekommunikationseinrichtung zu modifizieren oder zu aktualisieren.

2. Telekommunikationseinrichtung nach Anspruch 1, wobei die Webseite einem Java-Applet zugeordnet ist, welches so eingerichtet ist, dass es wenn es auf der entfernt liegenden Workstation ausgeführt wird, es ermöglicht, die Benutzereingabe als Befehlsdaten und Steuerdaten an den Webserver zu senden, um die Arbeitsweise der Telekommunikationseinrichtung zu modifizieren oder zu aktualisieren.

3. Telekommunikationseinrichtung nach Anspruch 1, wobei der Webserver mit der entfernt liegenden Workstation über ein Intranet (32) verbunden ist.

4. Telekommunikationseinrichtung nach Anspruch 1, darüber hinaus mit einem automatischen Nachrichtenkontenserver (500), der mit dem Webserver verbunden ist und der eine Mehrzahl von Webseiten aufweist, die für eine Überwachung und Verwaltung von Gebührenerfassungsinformationen vorgesehen sind.

5. Telekommunikationseinrichtung nach Anspruch 1, darüber hinaus mit einem Informations- und Problemberichtsserver (502), der mit dem Webserver verbunden ist und der eine Mehrzahl von Webseiten darauf gespeichert aufweist, die für eine Überwachung und Verwaltung von Statusinformationen vorgesehen sind.

6. Telekommunikationseinrichtung nach Anspruch 1, darüber hinaus mit einem Trassen-Logserver (504), der mit dem Webserver verbunden ist, und der eine Mehrzahl von Webseiten darauf gespeichert aufweist, die dafür vorgesehen sind, TrassenInformationsüberwachung- und -verwaltung zu programmieren.

7. Telekommunikationseinrichtung nach Anspruch 1, darüber hinaus mit einem automatischen Nachrichtenkontenserver (500), auf den der Webbrowser zugreifen kann und der eine Mehrzahl von darauf gespeicherten Webseiten aufweist, die für die Überwachung und Verwaltung von Gebührenerfassungsinformationen vorgesehen sind.

8. Telekommunikationseinrichtung nach Anspruch 1, darüber hinaus mit einem Informations- und Problemberichtsserver (502), auf den der Webbrowser zugreifen kann und der eine Mehrzahl von darauf gespeicherten Webseiten aufweist, die zur Überwachung und Verwaltung von Systemstatusinformationen vorgesehen sind.

9. Telekommunikationseinrichtung nach Anspruch 1, darüber hinaus mit einem Trassen-Logserver (504), auf den der Webbrowser zugreifen kann, und der eine Mehrzahl von darauf gespeicherten Webseiten aufweist, die dafür vorgesehen sind, eine Überwachung und Verwaltung von Trasseninformationen zu programmieren.

10. Telekommunikationseinrichtung nach Anspruch 1, wobei die Telekommunikationseinrichtung ein verteiltes Schaltsystem ist mit einer Diensteinheit (12), die mit mindestens einer Bereitstellungseinheit (14) verbunden ist, wobei der Webserver sich in der Diensteinheit befindet.

11. Telekommunikationseinrichtung nach Anspruch 1, wobei die Mehrzahl von Webseiten Webseiten umfassen, die für automatische Nachrichtenkonteninformationen zur Überwachung und Verwaltung von Gebührenerfassungsinformationen vorgesehen sind.

12. Telekommunikationseinrichtung nach Anspruch 1, wobei die Mehrzahl von Webseiten Webseiten umfassen, die für Informations- und Problemberichtsinformationen zur Überwachung und Verwaltung von Systemstatusinformationen vorgesehen sind.

13. Telekommunikationseinrichtung nach Anspruch 1, wobei die Mehrzahl von Webseiten Webseiten umfassen, die dafür vorgesehen sind, eine Überwachung und Verwaltung von Trasseninformationen zu programmieren.

14. Verfahren mit den Schritten:
Verbinden eines Webservers (84) einer Telekommunikationseinrichtung (62, 10, 30) mit einer entfernt liegenden Workstation (60), wobei die entfernt liegende Workstation ein von der Workstation lesbares Medium aufweist, welches einen Webbrowser (64) und einen zugeordneten Java-Server (66) aufweist, und
Herunterladen von Webseiten (90) von dem Webserver, wobei die Webseiten so eingerichtet sind, dass sie Überwachungsinformationen anzeigen, die der Telekommunikationseinrichtung zugeordnet sind, und
Empfangen einer Benutzereingabe und Übertragen der Benutzereingabe an den Webserver,
**dadurch gekennzeichnet, dass** der Schritt des Herunterladens darüber hinaus ein Herunterladen eines Java-Applets aufweist, das den Webseiten von dem Webserver zugeordnet ist, und dass das Verfahren darüber hinaus den Schritt aufweist, Ausführen des Java-Applets auf dem Java-Server, um die Telekommunikationseinrichtung zu überwachen und zu steuern, und wobei die Webseiten eine Webseite aufweisen, die es ermöglicht, die Benutzereingabe als Befehlsdaten und Steuerdaten an den Webserver zu senden, um die Arbeitsweise der Telekommunikationseinrichtung zu modifizieren oder zu aktualisieren.

15. Verfahren nach Anspruch 14, wobei die Webseite einem Java-Applet zugeordnet ist, das so eingerichtet ist, dass es, wenn es auf der entfernt liegenden Workstation ausgeführt wird, es ermöglicht, die Benutzereingabe als Befehlsdaten und Steuerdaten an den Webserver zu senden, um die Arbeitsweise der Telekommunikationseinrichtung zu modifizieren oder zu aktualisieren.

16. Verfahren nach Anspruch 14, wobei die Telekommunikationseinrichtung in einem Telekommunikationsnetzwerk bereitgestellt ist, mit den Schritten:
Verbinden der Telekommunikationseinrichtung über ein Intranet mit dem Internet, und
wobei der Schritt des Herunterladens der Webseiten von dem Webserver über das Internet und das Intranet aufweist, wobei die Webseiten so eingerichtet sind, dass sie Überwachungs- und Verwaltungsinformationen, die der Telekommunikationseinrichtung zugeordnet sind, anzeigt.

17. Verfahren nach Anspruch 16, darüber hinaus mit den Schritten:
Zugreifen auf einen automatischen Nachrichtenkontenserver (500), und
Herunterladen einer Mehrzahl von Webseiten, die zur Überwachung und Verwaltung von Gebührenerfassungsinformationen vorgesehen sind.

18. Verfahren nach Anspruch 16, darüber hinaus mit den Schritten:
Zugreifen auf einen Informations- und Problemberichtsserver (502), und
Herunterladen einer Mehrzahl von Webseiten, die zur Überwachung und Verwaltung von Systemstatusinformationen vorgesehen sind.

19. Verfahren nach Anspruch 16, darüber hinaus mit den Schritten:
Zugreifen auf einen Trassen-Logserver (504) und
Herunterladen einer Mehrzahl von Webseiten, die dafür vorgesehen sind, eine Überwachung und Verwaltung von Trasseninformationen zu programmieren.

20. Verfahren nach Anspruch 16, wobei der Schritt des Herunterladens darüber hinaus den Schritt des Herunterladens einer Mehrzahl von Webseiten umfasst, die für eine automatische Überwachung und Verwaltung von Nachrichtenkonteninformationen vorgesehen sind.

21. Verfahren nach Anspruch 16, wobei der Schritt des Herunterladens darüber hinaus den Schritt des Herunterladens einer Mehrzahl von Webseiten umfasst, die für eine Überwachung und Verwaltung von Systemstatusinformationen vorgesehen sind.

22. Verfahren nach Anspruch 16, wobei der Schritt des Herunterladens darüber hinaus den Schritt des Herunterladens einer Mehrzahl von Webseiten aufweist, die dafür vorgesehen sind, eine Trasseninformationsüberwachung und -verwaltung zu programmieren.

## Revendications

1. Equipement de télécommunications (62 ; 10 ; 30) comprenant :
un serveur Web (84) identifiable par une adresse Internet et apte à être connecté à un poste de travail distant (60), ledit poste de travail distant comprenant un support lisible par un poste de travail stockant un navigateur Web (64) et un serveur Java associé (66) ; et
un support lisible par un équipement stockant des pages Web (90) aptes à afficher des informations de surveillance associées à l'équipement de télécommunications et à recevoir une entrée d'utilisateur, les pages Web étant accessibles par le serveur Web ;
**caractérisé en ce que** le support lisible par un équipement comprend en outre des applets Java (92) associés aux pages Web, les applets Java étant téléchargeables sur le poste de travail distant et étant exécutables par le serveur Java pour surveiller et commander l'équipement de télécommunications, et lesdites pages Web comprennent une page Web qui permet d'envoyer l'entrée d'utilisateur sous forme de données de commande et de contrôle au serveur Web pour modifier ou mettre à jour les opérations d'équipement de télécommunications.

2. Equipement de télécommunications selon la revendication 1, dans lequel ladite page Web est associée à un applet Java apte, lorsqu'il est exécuté sur ledit poste distant, à permettre l'envoi de ladite entrée d'utilisateur sous forme de données de commande et de contrôle au serveur Web pour modifier ou mettre à jour les opérations d'équipement de télécommunications.

3. Equipement de télécommunications selon la revendication 1, dans lequel le serveur Web se couple au poste de travail distant par l'intermédiaire d'un intranet (32).

4. Equipement de télécommunications selon la revendication 1, comprenant en outre un serveur de comptabilisation de messages automatiques (500) en communication avec le serveur Web et ayant une pluralité de pages Web consacrées à la surveillance et à la gestion d'informations de facturation.

5. Equipement de télécommunications selon la revendication 1, comprenant en outre un serveur de rapport d'informations et de problèmes (502) en communication avec le serveur Web et ayant une pluralité de pages Web stockées sur celui-ci consacrées à la surveillance et à la gestion d'informations de statut de système.

6. Equipement de télécommunications selon la revendication 1, comprenant en outre un serveur de journal de trace (504) en communication avec le serveur Web et ayant une pluralité de pages Web stockées sur celui-ci consacrées à la surveillance et à la gestion d'informations de trace de programme.

7. Equipement de télécommunications selon la revendication 1, comprenant en outre un serveur de comptabilisation de messages automatiques (500) accessible par le navigateur Web et ayant une pluralité de pages Web stockées sur celui-ci consacrées à la surveillance et à la gestion d'informations de facturation.

8. Equipement de télécommunications selon la revendication 1, comprenant en outre un serveur de rapport d'informations et de problèmes (502) accessible par le navigateur Web et ayant une pluralité de pages Web stockées sur celui-ci consacrées à la surveillance et à la gestion d'informations de statut de système.

9. Equipement de télécommunications selon la revendication 1, comprenant en outre un serveur de journal de trace (504) accessible par le navigateur Web et ayant une pluralité de pages Web stockées sur celui-ci consacrées à la surveillance et à la gestion d'informations de trace de programme.

10. Equipement de télécommunications selon la revendication 1, dans lequel l'équipement de télécommunications est un système de commutation distribué ayant une unité de service (12) couplée à au moins une unité de livraison (14), le serveur Web résidant dans l'unité de service.

11. Equipement de télécommunications selon la revendication 1, dans lequel la pluralité de pages Web comprend des pages Web consacrées aux informations de comptabilisation de messages automatiques pour la surveillance et la gestion d'informations de facturation.

12. Equipement de télécommunications selon la revendication 1, dans lequel la pluralité de pages Web comprend des pages Web consacrées aux informations de rapport d'informations et de problèmes pour la surveillance et la gestion d'informations de statut de système.

13. Equipement de télécommunications selon la revendication 1, dans lequel la pluralité de pages Web comprend des pages Web consacrées à la surveillance et à la gestion d'informations de trace de programme.

14. Procédé comprenant les étapes consistant à :
connecter un serveur Web (84) d'un équipement de télécommunications (62 ; 10 ; 30) à un poste de travail distant (60), ledit poste de travail distant comprenant un support lisible par un poste de travail stockant un navigateur Web (64) et un serveur Java associé (66) ; et
télécharger des pages Web (90) du serveur, les pages Web étant aptes à afficher des informations de surveillance associées à l'équipement de télécommunications ; et
recevoir une entrée d'utilisateur et transmettre l'entrée d'utilisateur au serveur Web,
**caractérisé en ce que** l'étape de téléchargement comprend en outre l'étape consistant à télécharger des applets Java associés aux pages Web à partir du serveur Web et **en ce que** le procédé comprend en outre l'étape consistant à exécuter les applets Java sur le serveur Java pour surveiller et commander l'équipement de télécommunications et dans lequel lesdites pages Web comprennent une page Web qui permet d'envoyer l'entrée d'utilisateur sous forme de données de commande et de contrôle au serveur Web pour modifier ou mettre à jour les opérations d'équipement de télécommunications.

15. Procédé selon la revendication 14, dans lequel ladite page Web est associée à un applet Java apte, lorsqu'il est exécuté sur ledit poste distant, à permettre l'envoi de ladite entrée d'utilisateur sous forme de données de commande et de contrôle au serveur Web pour modifier ou mettre à jour les opérations d'équipement de télécommunications.

16. Procédé selon la revendication 14, dans lequel l'équipement de télécommunications est fourni dans un réseau de télécommunications, comprenant les étapes consistant à :
connecter l'équipement de télécommunications par un intranet à l'Internet ; et
dans lequel l'étape de téléchargement comprend l'étape consistant à télécharger les pages Web à partir du serveur Web par l'intermédiaire de l'Internet et de l'intranet, les pages Web étant aptes à afficher des informations de surveillance et de gestion associées à l'équipement de télécommunications.

17. Procédé selon la revendication 16, comprenant en outre les étapes consistant à :
accéder à un serveur de comptabilisation de messages automatiques (500) ; et
télécharger une pluralité de pages Web consacrées à la surveillance et à la gestion d'informations de facturation.

18. Procédé selon la revendication 16, comprenant en outre les étapes consistant à :
accéder à un serveur de rapport d'informations et de problèmes (502) ; et
télécharger une pluralité de pages Web consacrées à la surveillance et à la gestion d'informations de statut de système.

19. Procédé selon la revendication 16, comprenant en outre les étapes consistant à :
accéder à un serveur de journal de trace (504) ; et
télécharger une pluralité de pages Web consacrées à la surveillance et à la gestion d'informations de trace de programme.

20. Procédé selon la revendication 16, dans lequel l'étape de téléchargement comprend en outre l'étape consistant à télécharger une pluralité de pages Web consacrées à la surveillance et à la gestion d'informations de comptabilisation de messages automatiques.

21. Procédé selon la revendication 16, dans lequel l'étape de téléchargement comprend en outre l'étape consistant à télécharger une pluralité de pages Web consacrées à la surveillance et à la gestion d'informations de statut de système.

22. Procédé selon la revendication 16, dans lequel l'étape de téléchargement comprend en outre l'étape consistant à télécharger une pluralité de pages Web consacrées à la surveillance et à la gestion d'informations de trace de programme.
